(19) Europäisches Patentamt
European Patent Office
Office européen des brevets

(11) **EP 1 443 453 B1**

(12) **EUROPEAN PATENT SPECIFICATION**

(45) Date of publication and mention
of the grant of the patent:
**10.10.2007 Bulletin 2007/41**

(51) Int Cl.:
*G06K 9/66* (2006.01)      *G06T 5/00* (2006.01)
*H04N 5/253* (2006.01)      *H04N 7/01* (2006.01)

(21) Application number: **03001861.8**

(22) Date of filing: **29.01.2003**

(54) **Method for picture improvement**

Bildverbesserungsmethode

Méthode d'amélioration d'image

(84) Designated Contracting States:
**DE FR GB**

(43) Date of publication of application:
**04.08.2004 Bulletin 2004/32**

(60) Divisional application:
**07013135.4**

(73) Proprietor: **Sony Deutschland GmbH**
**10785 Berlin (DE)**

(72) Inventor: **Unruh, Christian,**
**c/o Stuttgart Technology Center**
**Hedelfinger Strasse 61,**
**70327 Stuttgart (DE)**

(74) Representative: **Müller - Hoffmann & Partner**
**Patentanwälte,**
**Innere Wiener Strasse 17**
**81667 München (DE)**

(56) References cited:
**WO-A-95/24017**           **US-A- 5 497 196**
**US-A- 6 064 775**          **US-A1- 2002 149 703**

• **WISCHERMANN G: "DAS DIGITALE WETGATE.
DIE DRITTE NOISE-REDUCER-GENERATION
VON PHILIPS BTS" FERNSEH UND
KINOTECHNIK, VDE VERLAG GMBH. BERLIN,
DE, vol. 50, no. 7, 1 July 1996 (1996-07-01), pages
387-390, XP000623232 ISSN: 0015-0142**

EP 1 443 453 B1

**Description**

The invention relates to a method for picture improvement, and in particular to a method for picture improvement based on image content classification/identification.

The performance of picture improvement (PI) techniques, i.e. an increase of the overall picture quality depends strongly on the content of the image to be improved. The content of the image here refers to, e.g. camera mode, film mode, a scene change, etc.

The content of an image depends on many parameters, e.g. spatial and/or temporal information of the current image. The influence of the content of the image on the different parameters is generally difficult to describe. This is a problem, if the content of an image must be identified or classified using a set of parameters to identify the content of an image.

Currently, the content of an image is determined by a simple threshold identification/classification. Thereby, a hand-tuned "try and error"-identification/classification is performed. This means that the optimization of the identification/classification using a given set of parameters describing the content of the image is very time-consuming. Further, since the identification/classification is hand-tuned, only a limited set of data can be examined. The success rate for identification/classification is therefore very low when using the prior art method for identification/classification.

The article "Das digitale Wetgate. Die dritte Noise-Reducer-Generation von Philips BTS", Fernseh- und Kinotechnik, VDE Verlag GmbH, Berlin, vol. 50 no. 7, 1. Juli 1996, pages 387-390, relates to the conversion of cinematographic film to video and describes a system for adaptively filtering video signals. First, motion detection is performed, and then, the video sequence is filtered in accordance with the motion detection. Furthermore, the system is capable of detecting fading and scene changes.

US Patent Application No. US 2002/0149703 "Method, System and Article of Manufacture for Identifying the Source Type and Quality Level of a Video Sequence" to D.R. Adams and W. Sheet discloses a deinterlacing system which converts an interlaced video stream into a progressive video stream. The deinterlacing system includes a field assembly responsive to a last field, a next field, a current field and progressive source phase and operative to develop a progressive output frame, a source detection module responsive to last, next and current fields and operative to develop a progressive source phase and a progressive source detected and an intraframe deinterlacer responsive to the progressive output frame and the progressive source detected and operative to develop a progressive frame output.

U.S. Patent 6,064,775 "Image Processing Apparatus for Enhancing Texture and Three Dimensional Effect" to N. Suzuki et al. discloses an image processing apparatus, which improves the qualitative effect or 3-dimensional effect on feeling of a subject picture, first analyzes the feature of the input picture thereby to evaluate feature values such as the mean value, histogram center value, variance, etc. pertaining to the lightness, saturation, and edge value. It discriminates the picture to be a texture stuff, colored stuff, etc. based on these feature values, and determines an image process operator and an image process parameter suitable for the purpose of process.

U.S. Patent 5,497,196 "Video Camera Having an Adaptive Automatic Iris Control Circuit" to K. Nishida discloses a video camera including a lens, an iris, an iris driving circuit, and an image sensor. The video camera further comprises a circuit for dividing the picture into a plurality of sub-areas for extracting the luminance of each sub-area according to the luminance signal provided from the image sensor as a luminance distribution signal, a circuit for generating a signal defining a target value of an iris driving signal, an adaptive circuit using an artificial neural network to which the luminance distribution signal is input for carrying out adaptive conversion so that the offset between a provided teacher signal and its own output is minimized, and a switch for selecting either the target value signal or the output of the adaptive circuit to provide the same as a teacher signal to the adaptive circuit.

In International Patent Application WO 95/24017 "A Top Down Preprocessor for a Machine Vision System" discloses an image recognition and classification system including a preprocessor in which a "top-down" method is used to extract features from an image, an associative learning neural network system, which groups the features into patterns and classifies the patterns, and a feedback mechanism which improves system performance by tuning preprocessor scale, feature detection, and feature selection.

It is an object of the invention to provide a method for picture improvement, which is less time consuming, and wherein no hand-tuned identification/classification of the image is needed.

To achieve this objective, the invention provides a method for picture improvement according to claim 1. In addition, the invention provides a picture improvement system, a computer program product, and a computer readable storage medium as defined in claims 7, 8, and 9, respectively. Further features and preferred embodiments are respectively defined in respective subclaims and/or in the following description.

A method for picture improvement comprises the steps of receiving image data as input data, classifying and/or identifying the content of said image data, thereby generating image content classification/identification data from said image data, improving and/or processing said image data using said image content classification/identification data, thereby generating and/or outputting improved image data as output data.

For generating said image content classification/identification data, a trainable classification method is used.

Said trainable classification method is based on an artificial neural network and/or a Bayesian belief network.

said image content classification/identification data is generated to be descriptive for the following image modes

- no-motion,
- camera-mode,
- film-mode.

Advantageously, one or any further combination of and/or types:

- motion sequence,
- noise level,
- scene change, and
- lightning conditions of current image, in particular dark, medium dark, normal, medium-bright and/or bright image.

For generating said image content classification/identification data, a feature vector is used, which is generated from said image data.

Advantageously, said feature vector is generated to contain spatial and/or temporal information.

Further, in a preferred embodiment said spatial information is generated to contain information about noise measurement, average picture level, histogram analysis, and/or other features used in spatial content analysis.

Said temporal information is thereby preferably generated to contain information about motion estimation, and/or other features used in temporal content analysis.

A training of said trainable classification method is advantageously performed as supervised training wherein a target information is said image content classification/identification data and an input information is said feature vector.

A picture improvement system according to the present invention is capable of performing or realizing a method for picture improvement as defined above and/or the steps thereof.

A Computer program product according to the present invention, comprises computer program means adapted to perform and/or to realize the method of picture improvement according to the present invention as defined above and/or the steps thereof, when it is executed on a computer, a digital signal processing means, and/or the like.

A Computer readable storage medium according to the present invention comprises a computer program product as defined above.

The invention and advantageous details thereof will be explained by way of an exemplary embodiment thereof in the following with reference to the accompanying drawings, in which

**Fig. 1**     is a block diagram, which shows the main steps performed according to an embodiment of the invention;

**Fig. 2**     is a block diagram, which shows a different view of the main steps performed according to an embodiment of the invention;

**Fig. 3**     is a block diagram, which shows the steps performed within an image content/classification step;

**Fig. 4**     is a block diagram, which shows the steps performed within an image content feature analysis step;

**Fig. 5**     is a block diagram, which shows the steps performed within a spatial content analysis step;

**Fig. 6**     is a block diagram, which shows the steps performed within a temporal content analysis step;

**Fig. 7**     depicts the structure of an artificial neural network ANN;

**Fig. 8**     depicts a detailed view of the different layers of the artificial neural network ANN;

**Fig. 9**     is a block diagram illustrating the training of the artificial neural network ANN;

**Fig. 10**    shows the motion phases in a film mode;

**Fig. 11**    shows the motion phases in a camera mode;

**Fig. 12**    shows the steps performed within the temporal content analysis step, for the case of a video-mode classification/identification.

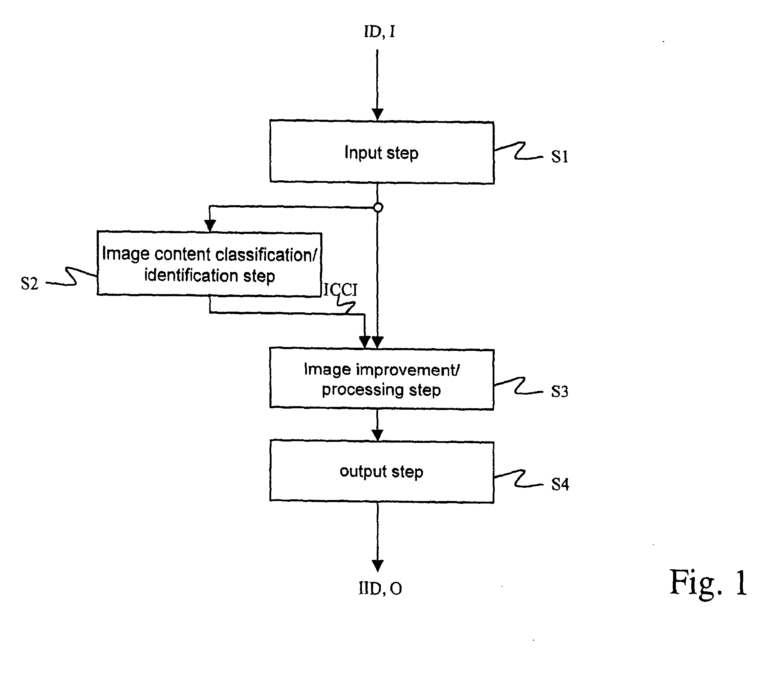

In figure 1 image data ID is received as input data I in an input step S1. The received image data ID is used as input for an image content identification/classification step S2. The output of the image content identification/classification step S2 is image content classification/identification data ICCI. The input data ID and the image content classification/identification data ICCI are used as input for an image improvement/processing step S3. The output of the image improvement/processing step S3 is received by an output step S4, which outputs improved image data IID as output data O.

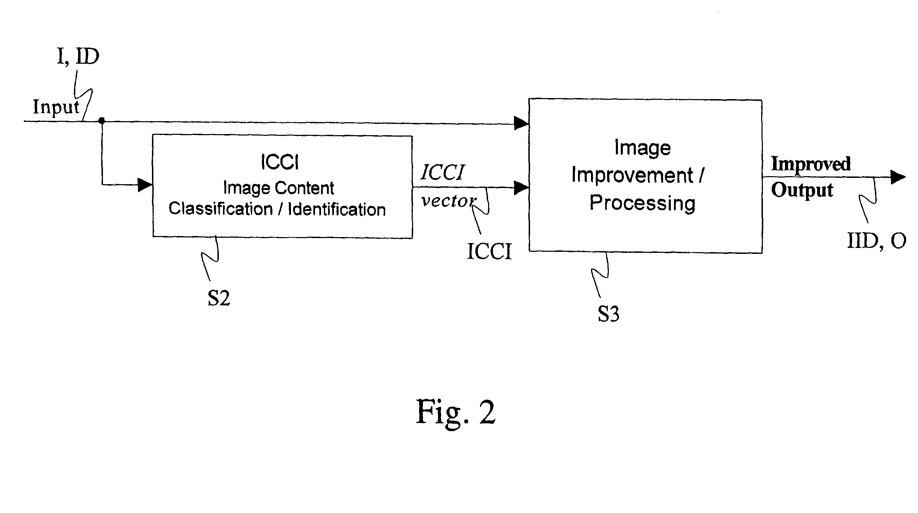

In figure 2 the image data ID is used directly as input for the image content classification/identification step S2 and as input for the image improvement/processing step S3. Again, in the image content classification/identification step S2 the image content classification/identification data ICCI is generated, which is used as input for the image improvement/processing step S3. The image content classification/identification data ICCI describes the content of the image data ID to be improved. The image data ID is generated from an image to be improved, therefore classifying/identifying the content of the image data ID is equivalent to classifying/identifying the underlying image. The output O of the system, i.e., the output of the image improvement/processing step S3 is the improved image data IID which is equivalent to the improved picture.

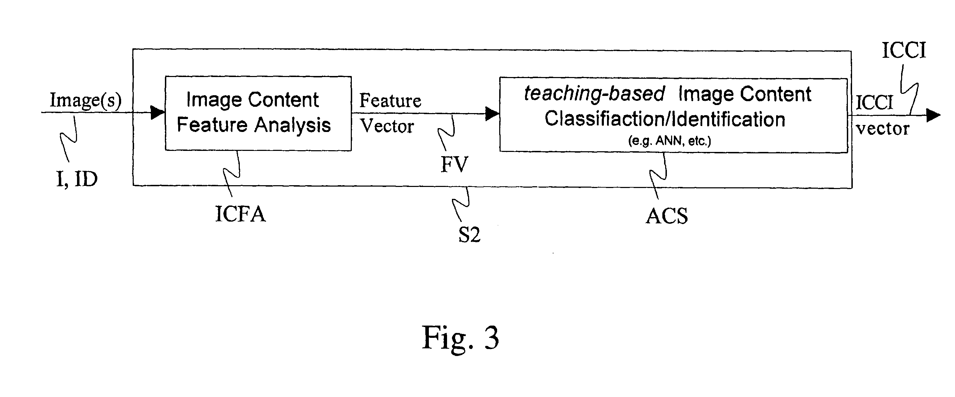

Figure 3 shows a block diagram to illustrate the steps performed within the image content classification/identification step S2. An image content feature analysis step ICFA receives the image data ID as input and outputs a feature vector FV. This feature vector FV is used in an automatic classification step ACS to generate the image content classification/identification data ICCI. As mentioned above, the image content classification/identification data ICCI describes the content of the image data ID. This means that within the automatic classification step ACS the feature vector FV is used to classify the input data ID. For a classification preferably a trainable classification method is used. Such a trainable classification method can be, e.g., an artificial neural network ANN, or a Bayesian belief network BBN.

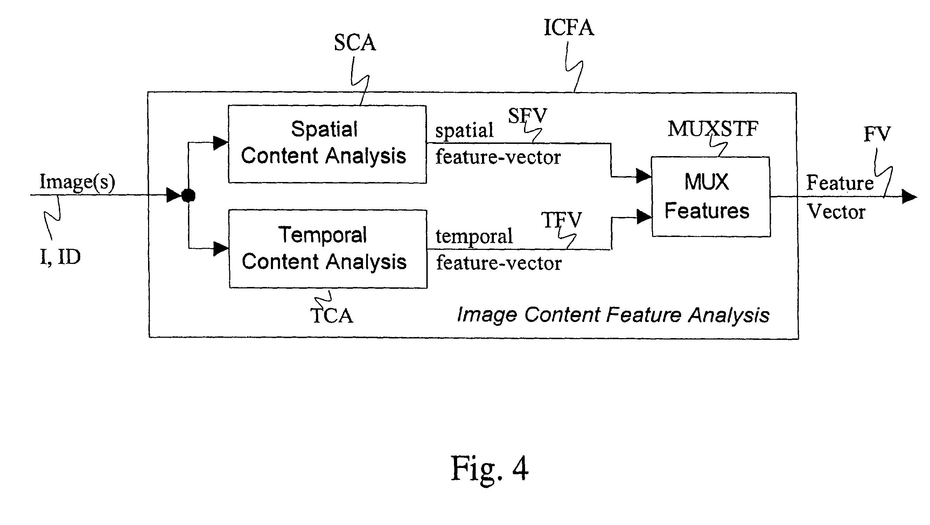

At hand of figure 4 the steps performed within the image content feature analysis step ICFA will be explained. As mentioned above, the input for the image content feature analysis step ICFA is the image data ID. From this image data ID a spatial feature vector SFV is generated in a spatial content analysis step SCA. In parallel, a temporal feature vector TFV is generated in a temporal content analysis step TCA. Both feature vectors are multiplexed, i.e. combined, in a spatial and temporal multiplexing step MUXSTF. The output of this step is the feature vector FV. It should be noted that the spatial content analysis step SCA or the temporal content analysis step TCA may be omitted. In this case, the feature vector FV only contains information from the temporal feature vector TFV or from the spatial feature vector SFV.

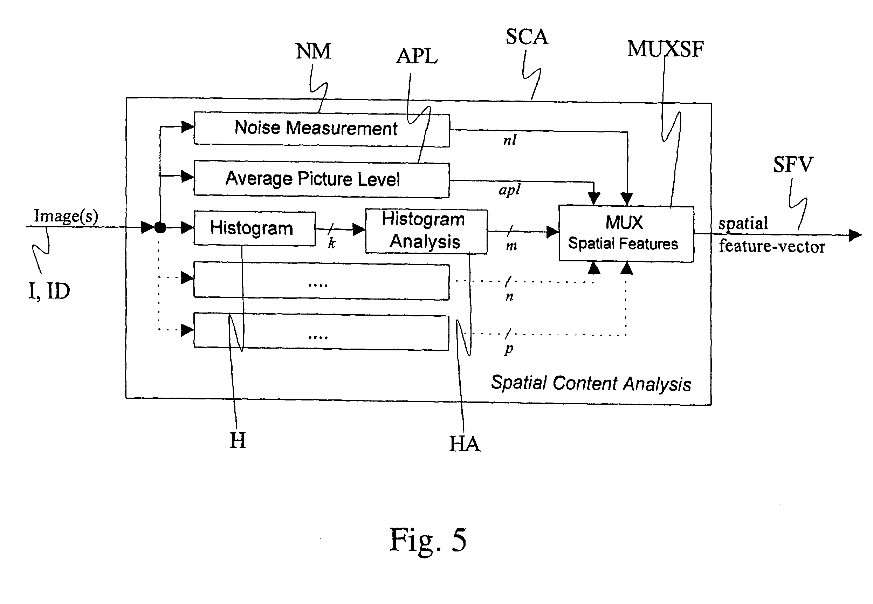

Figure 5 shows the steps performed within the spatial content analysis step SCA. Within the spatial content analysis step SCA the following steps are performed, whereby for each step the image data ID is used as input:

- a noise measurement step NM, generating noise measurement features nl,
- an average pixel level analysis step, which is the same as a picture level analysis, generating average pixel level features APL,
- a histogram generating step H, which generates a histogram of the image data ID and outputs histogram data k. This histogram data k is used in a histogram analysis step HA which outputs histogram analysis features m;
- further steps relating to spatial content analysis, that means the extraction, generation, and analysis of the image content in the spatial domain, whereby other spatial content analysis features n, p are generated.

All of the output data, i.e., the noise measurement features nl, the average pixel level features APL, the histogram analysis features m, and the other spatial content analysis features n, p, are multiplexed in a spatial multiplexing step MUXSF to yield the spatial feature vector SFV. Multiplexing here refers to the combination of the different above-mentioned features to a single vector, the spatial feature vector SFV, which is given by

$$spatial\ feature\ vector$$

$$= \left( nl, apl, \underbrace{m_0, m_1, \ldots, m_{m-2}, m_{m-1}}_{m}, \underbrace{n_0, n_1, \ldots, n_{n-2}, n_{n-1}}_{n}, \ldots, \underbrace{p_0, p_1, \ldots, p_{p-2}, p_{p-1}}_{p}, \right) \quad (1)$$

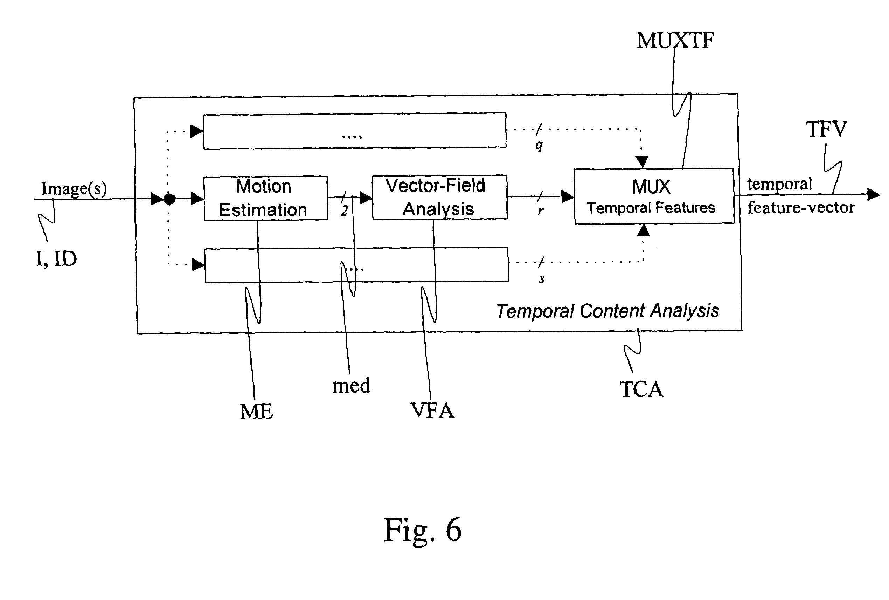

Figure 6 depicts the different steps performed within the temporal content analysis step TCA. Within the temporal content analysis step TCA the following steps are performed, whereby in each step the image data ID is used as input:

- A motion estimation step ME outputting motion estimation data med, which motion estimation data med is used as input for a vector field analysis step VFA outputting vector field analysis features r;

- further steps relating to temporal content analysis, which further steps output other temporal content analysis features q, s. The vector field analysis feature r and the other temporal content analysis feature q, s are multiplexed in a temporal multiplexing step MUXTF to yield the temporal feature vector TFV. Again, here multiplexing means to combine the different temporal features, i.e., the vector field analysis feature r, and the other temporal content analysis features q, s. The temporal feature vector TFV is therefore given as follows:

$$temporal\ feature\ vector = \left( \ldots, \underbrace{q_0, q_1, \ldots, q_{q-2}, q_{q-1}}_{q}, \underbrace{r_0, r_1, \ldots, r_{r-2}, r_{r-1}}_{r}, \underbrace{s_0, s_1, \ldots, s_{s-2}, s_{s-1}}_{s}, \ldots \right) \quad (2)$$

As explained above at hand of figure 4, the spatial feature vector SFV and the temporal feature vector TFV are combined in the spatial and temporal multiplexing step MUXSTF to yield the feature vector FV. Thus, the feature vector FV is given by

$$feature\ vector$$

$$= \left( \underbrace{nl, apl, m_0, \ldots, m_{m-1}, n_0, \ldots, n_{n-1}, \ldots, P_0, \ldots, P_{p-1}}_{spatial\ feature\ vector}, \underbrace{\ldots, q_0, \ldots, q_{q-1}, r_0, \ldots, r_{r-1}, s_0, \ldots, s_{s-1}}_{temporal\ feature\ vector} \right) \quad (3)$$

As mentioned above, the feature vector FV is used as input vector IV for the automatic classification step ACS. Within the automatic classification step ACS any technique of complex linear/non-linear correlation analysis of input and output data may be used, e.g., an artificial neural network ANN or a Bayesian belief network BBN. In a preferred embodiment of the invention an artificial neural network ANN is used for classification/identification of the input vector IV, i.e., a complex non-linear correlation analysis is performed. The main advantage of using an artificial neural network ANN for a classification is its capability to "learn" the classification from a set of training data which consists of pairs of input vectors IV and target vectors TV. As mentioned above, the input vector IV is the feature vector FV. The target vector TV contains the information about the image content classification/identification for a respective input vector IV, i.e. the aspired image content classification/identification.

The use of an artificial neural network ANN in the context of the invention has the great advantage that the artificial neural network ANN can be adopted to changing conditions quickly while still achieving a high degree of reliability with respect to the aspired classification/identification of the image data ID.

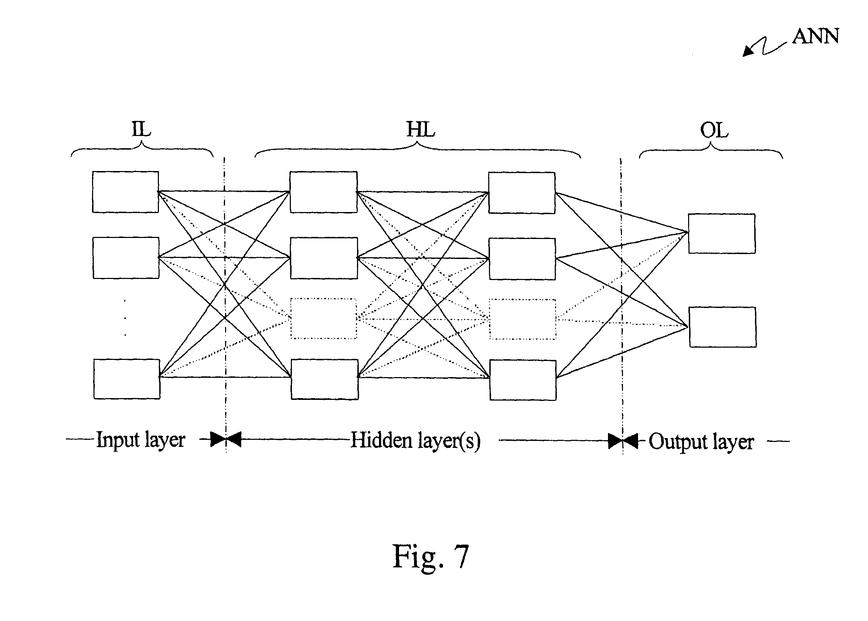

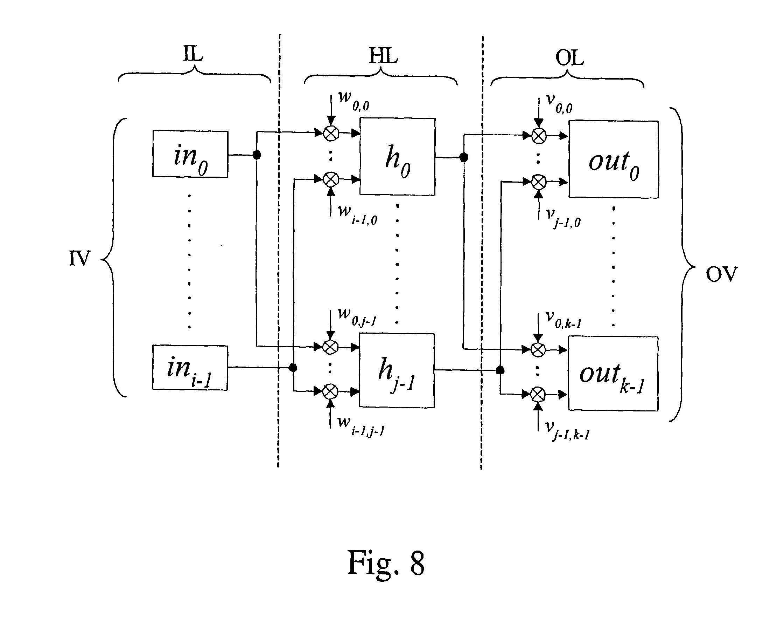

Figure 7 shows the general structure of the artificial neural networks ANN. The network consists of an input layer IL, one or more hidden layers HL, and an output layer OL. Figure 8 shows the detailed structure of the used artificial neural network ANN. In the input layer IL the

$$input\ vector\ IV = \begin{bmatrix} in_0 \\ \cdot \\ \cdot \\ in_{i-1} \end{bmatrix} \quad (4)$$

is used as input. The hidden layer HL consists of hidden neurons $h_0, \ldots, h_{j-1}$. The input of the hidden neurons $h_0, \ldots, h_{j-1}$ is given by

$$\begin{bmatrix} h_0 \\ \cdot \\ \cdot \\ h_{j-1} \end{bmatrix} = \begin{bmatrix} w_{0,0} & \cdot & \cdot & w_{i-1,0} \\ \cdot & \cdot & \cdot & \cdot \\ \cdot & \cdot & \cdot & \cdot \\ w_{0,j-1} & \cdot & \cdot & w_{i-1,j-1} \end{bmatrix} \cdot \begin{bmatrix} in_0 \\ \cdot \\ \cdot \\ in_{i-1} \end{bmatrix} \qquad (5)$$

During training of the artificial neural network ANN the weights $w_{0.0}$, ..., $w_{i-1.0}$, $w_{0.j-1}$, ..., $W_{i-1,j-1}$ as indicated in connection with the hidden layer HL of figure 8 are adapted during training.

The output vector OV of the output layer OL is given by

$$\begin{bmatrix} out_0 \\ \cdot \\ \cdot \\ out_{k-1} \end{bmatrix} = \begin{bmatrix} v_{0,0} & \cdot & \cdot & v_{j-1,0} \\ \cdot & \cdot & \cdot & \cdot \\ \cdot & \cdot & \cdot & \cdot \\ v_{0,k-1} & \cdot & v_{j-1,k-1} \end{bmatrix} \cdot \begin{bmatrix} h_0 \\ \cdot \\ \cdot \\ h_{j-1} \end{bmatrix} \qquad (6)$$

During training the weights $v_{0,0}$, ..., $v_{j-1,0}$, $v_{0,k-1}$, ..., $v_{j-1,k-1}$ and the weights $w_{0,0}$, ..., $w_{i-1,0}$, $w_{0,j-1}$, ..., $w_{i-1,j-1}$ are adapted. Each hidden cell/unit, i.e. hidden neuron, of the artificial neural network ANN has an activation function $f_{act}$. This activation function describes how the result/output of each cell/unit can be derived from the corresponding input data. The output of a cell/unit of the hidden layer is given by

$$h_j = f_{act}\left( \sum_{n=0}^{i-1} (in_n \cdot w_{n,j}) \right) \qquad (7)$$

The learning process, supervised learning, typically some kind of back propagation, is performed using the above-mentioned pairs of input vectors IV and target vectors TV. As mentioned above, the input vector IV is the feature vector FV and the target vector TV contains flags denoting the correct, i.e., aspired, classification/identification of the image data ID. The training and simulation of the artificial neural network ANN may be realized by a state of the art artificial neural network simulator as, e.g., the Stuttgart Neural Network Simulator SNNS. The simulator SNNS solves the equations (5) und (6) of the complex non-linear input → hidden layer → output correlation.

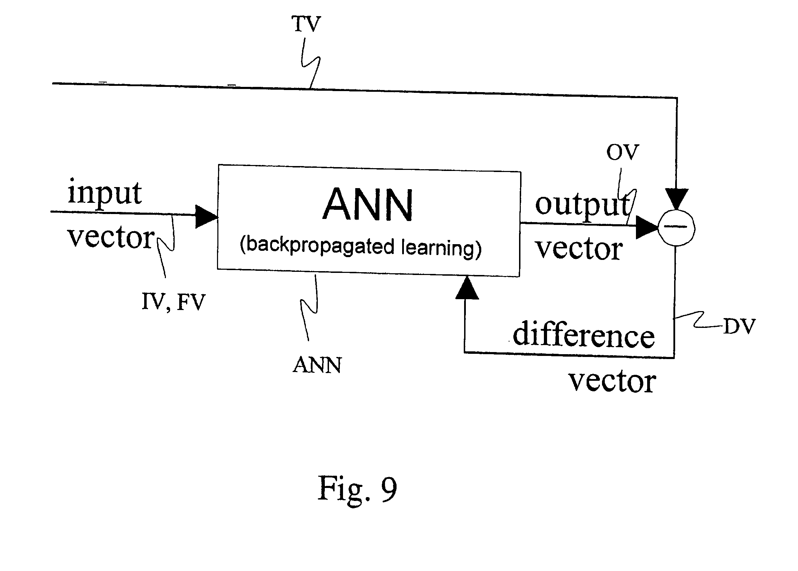

During training of the artificial neural network ANN the back propagation algorithm is used, which is depicted in figure 9. Thereby, a difference vector DV is used for adjusting the weights (coefficients). The difference vector DV is computed by subtracting a target vector TV from the corresponding output vector OV of the artificial neural network ANN. The target vector TV contains the respective aspired image content classification/identification for the input vector IV.

In the following, an example for the classification/identification of image data ID is given. In this example, different modes of a video signal are classified. In the invention, the following modes will be classified/identified:

- No motion, i.e., still picture;
- film mode, i.e., 25 motion phases within a 50 Hz signal, motion between consecutive frames;
- camera mode, i.e., 50 motion phases within a 50 Hz signal, motion between consecutive fields;

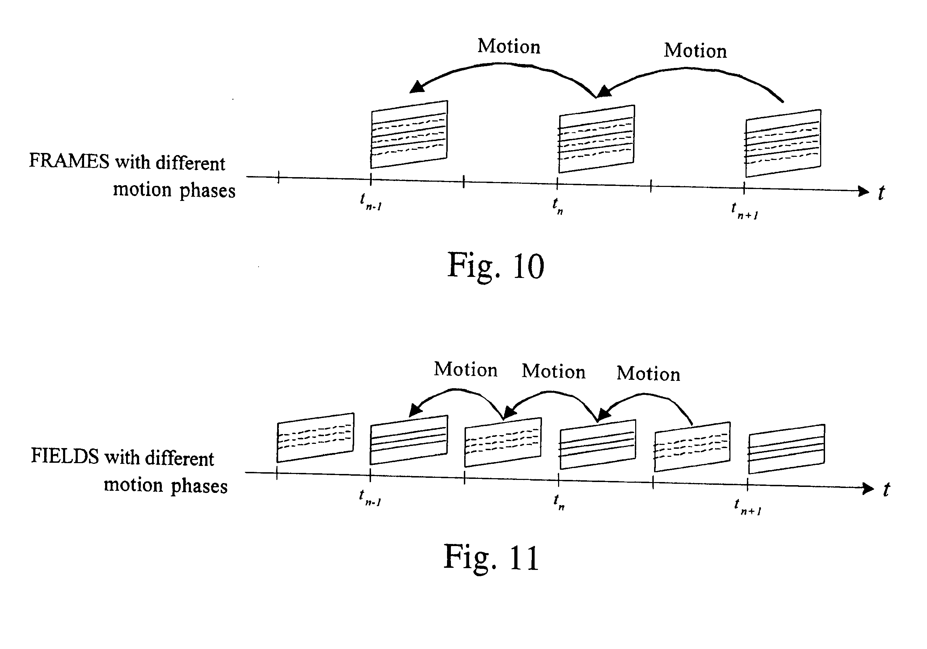

Figure 10 depicts the motion phases in film mode and figure 11 depicts the motion phases in a camera mode. In camera mode, in a stream of fields, there is motion between two consecutive fields, and in film mode there in only motion between frames.

Based on the correct and reliable classification/identification of the above-mentioned video modes the post-processing modules within the image improvement/processing step S3 are adjusted accordingly. These processing modules can be some kind of picture improvement (PI) techniques that use the classification/identification in order to increase the overall performance.

As explained in connection with figure 4 the feature vector FV contains the spatial feature vector SFV from the spatial content analysis step SCA and the temporal feature vector TFV from the temporal content analysis step TCA. However, in the example considered here, whereby different video modes are classified/identified, only the temporal content analysis step TCA is performed.

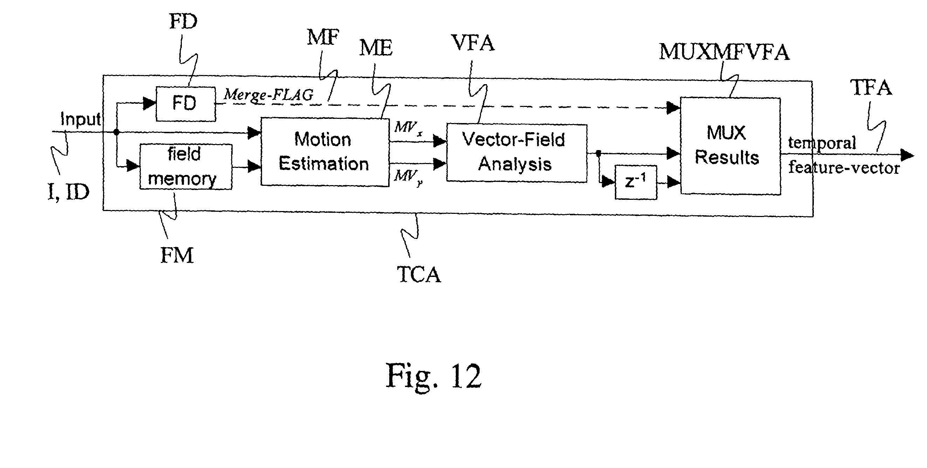

Figure 12 shows an exemplary embodiment of the temporal content analysis step TCA with respect to the example where different video modes are classified.

The input for the temporal content analysis step TCA is the image data ID, which is converted to a stream of fields using a field memory FM. The motion estimator ME then estimates the motion between two consecutive fields. The results of the ME are two vector fields that represent the horizontal motion $MV_x$ and the vertical motion $MV_y$. Both vector-fields are analyzed in the vector-field analysis step. Within this step, the following number of occurrences are determined:

| | |
|---|---|
| $MV_x$: | Positive x vectors |
| $MV_x$: | Negative x vectors |
| $MV_x$: | ZERO x vectors |
| $MV_y$: | Positive y vectors |
| $MV_y$: | Negative y vectors |
| $MV_y$: | ZERO y vectors |

Therefore a set of 6 values is generated for each motion estimation ME. The result (6 values) of the previous 'Vector-field analysis' is stored in a buffer $z^{-1}$. As soon as a field of a new frame is next, in a frame detector step a valid Merge Flag MF is sent out. In a merge flag and vector field analysis data multiplexing step MUXMFVFA, the result of the current 'Vector-field Analysis' and the previous results, which are stored in the buffer $z^{-1}$, are multiplexed, but only if the merge flag MF is valid.

By doing this, a set of 12 values is generated and the result is the 'temporal feature vector' or simply 'feature vector' due to the fact that the image feature content analysis step ICFA consists only of the temporal content analysis step TCA. This feature vector is now used to train the articial neural network ANN with a target vector that contains 3 components (NoMotion, FILM-Mode and CAMERA-Mode). This means for classification the output vector OV of the artificial neural network ANN contains the information about the automatically classified video mode.

As mentioned above, the current invention is not limited to the embodiment described above (Video-mode classification/identification). The reliability of this embodiment could furthermore increased if additional temporal content analysis is done and/or spatial content analysis is added.

**Reference Symbols**

| | |
|---|---|
| ACS | automatic classification step |
| ANN | artificial neural network |
| APL | average pixel level analysis step |
| apl | average pixel level feature |
| DV | difference vector |
| FD | frame detector |
| FM | field memory |
| FV | feature vector |
| H | histogram generating step |
| HA | histogram analysis step |
| HL | hidden layer |
| I | input data |
| ICCI | image content classification/identification data |
| ICFA | image content feature analysis step |
| ID | image data |
| IID | improved image data |
| IL | input layer |
| IV | input vector |
| m | histogram analysis features |
| ME | motion estimation step |
| med | motion estimation data |
| MF | merge flag |

| MUXMFVFA | merge flag and vector field analysis data analysis step |
| MUXSF | spatial multiplexing step |
| MUXSTF | spatial and temporal multiplexing step |
| MUXTF | temporal multiplexing step |
| n,p | other spatial content analysis features |
| nl | noise measurement features |
| NM | noise measurement step |
| O | output data |
| OL | output layer |
| OV | output vector |
| q,s | other temporal content analysis features |
| r | vector-field analysis features |
| S1 | input step |
| S2 | image content classification/identification step |
| S3 | image improvement/processing step |
| S4 | output step |
| SCA | spatial content analysis step |
| SFV | spatial feature vector |
| TCA | temporal content analysis step |
| TFV | temporal feature vector |
| TV | target vector |
| VFA | vector-field analysis step |

**Claims**

1. A method for picture improvement comprising the steps of

 - receiving (S1) image data (ID) as input data (I),
 - generating (ICFA) a feature vector (FV) from said image data,
 - using the feature vector for classifying the image data and for generating image content classification/identification data (ICCI),
 - wherein a trainable classification method is used for generating said image content classification/identification data (ICCI), said trainable classification method being based on an artificial neural network and/or a Bayesian belief network,
 - wherein a training of said trainable classification method (S2) is performed as supervised training wherein target information is said image content classification/identification data (ICCI) and input information is said feature vector (FV).
 - with the target information containing flags denoting an aspired classification of the image data,
 - improving and/or processing (S3) said image data (ID) using said image content classification/identification data (ICCI), thereby generating and/or outputting (S4) improved image data (IID) as output data (O),
 - wherein the image data is a video signal, with the method being used for classifying different modes of the video signal, and
 - wherein the following modes of the video signal are classified: no motion, film mode, camera mode.

2. The method according to claim 1,
 **characterized in that** the step of generating (ICFA) a feature vector (FV) from said image data comprises at least one of the following steps:

 - converting the image data to a stream of fields;
 - estimating the motion between consecutive fields;
 - generating vector fields that represent motion between consecutive fields;
 - analyzing the vector fields and generating a feature vector.

3. The method according to any one of the preceding claims,
 **characterized in that** said image content classification/identification data (ICCI) is generated to be further descriptive for one or any combination of the following image modes and/or types:

- motion sequence,
- noise level,
- scene change, and
- lightning conditions of current image, in particular dark, medium dark, normal, medium-bright and/or bright image.

4. The method according to any one of the preceding claims,
**characterized in that** said feature vector (FV) is generated to contain spatial (SFV) and/or temporal (TFV) information.

5. The method according to claim 4,
**characterized in that** said spatial information (SFV) is generated to contain information about noise measurement (NM), average picture level (APL), histogram analysis (HA), and/or other features used in spatial content analysis.

6. The method according to claim 4 or claim 5,
**characterized in that** said temporal information (TFV) is generated to contain information about motion estimation (ME), and/or other features used in temporal content analysis.

7. Picture improvement system,
which is capable of performing a method for picture improvement according to any one of the preceding claims 1 to 6 and the steps thereof.

8. Computer program product,
comprising computer program means adapted to perform the method of picture improvement according to any one of the claims 1 to 6 and the steps thereof, when it is executed on a computer or a digital signal processing means.

9. Computer readable storage medium,
comprising a computer program product according to claim 8.

**Patentansprüche**

1. Bildverbesserungsmethode umfassend die Schritte:

- Empfangen (S 1) von Bilddaten (ID) als Eingabedaten (I),
- Erzeugen (ICFA) eines Merkmalvektors (FV) aus den Bilddaten,
- Verwenden des Merkmalvektors zum Klassifizieren der Bilddaten und zum Erzeugen von Bildinhalt-Klassifizierungs-/ Identifizierungs -Daten (ICCI),
- wobei eine trainierbare Klassifizierungsmethode verwendet wird, um die Bildinhalts-Klassifizierungs-/Identifizierungs-Daten (ICCI) zu erzeugen,

wobei die trainierbare Klassifizierungsmethode auf einem künstlichen, neuralen Netzwerk und/oder einem Bayesischem Vorstellungsnetzwerk begründet ist,

- wobei ein Training der tranierbaren Klassifizierungsmethode (S2) als Überraschungstraining durchgeführt wird, wobei die Zielinformation die Bildinhalt-Klassifizierungs-/Identifizierungs-Daten (ICCI) und die Eingangsinformation der Merkmalsvektor (FV) ist,
- wobei die Zielinformation Kennungen (Flags) enthält, die eine angestrebte Klassifikation der Bilddaten bezeichnen,
- Verbessern und/oder Verarbeiten (S3) der Bilddaten (ID) unter Verwendung der Bildinhalts-Klassifizierungs-/Identifizierungs-Daten (ICCI), wodurch verbesserte Bilddaten (IID) als Ausgabedaten (O) erzeugt und/oder herausgegeben werden (S4),
- wobei die Bilddaten ein Videosignal sind, wobei die Methode zur Klassifizierung unterschiedlicher Modi des Videosignals verwendet wird, und
- wobei die folgenden Modi des Videosignals klassifiziert werden: keine Bewegung, Filmmodus, Kameramodus.

2. Methode nach Anspruch 1, **dadurch gekennzeichnet, dass** der Schritt des Erzeugens (ICFA) eines Merkmalvektors (FV) aus den Bilddaten wenigstens einen der folgenden Schritte umfasst:

- Umsetzen der Bilddaten in eine Folge von Feldern;
- Abschätzen der Bewegung zwischen aufeinander folgenden Feldern;
- Erzeugen von Vektorfeldern, die eine Bewegung zwischen aufeinander folgenden Feldern repräsentieren;
- Analysieren der Vektorfelder und Erzeugen eines Merkmalvektors.

**3.** Methode nach einem der vorhergehenden Ansprüche, **dadurch gekennzeichnet, dass** die Bildinhalts-Klassifizierungs-/Identifizierungs-Daten (ICCI) so erzeugt werden, dass sie des weiteren beschreibend für eine oder eine beliebige Kombination der folgenden Bildmodi und/oder Bildtypen beschreibend sind:

- Bewegungssequenz;
- Rauschniveau;
- Szenenänderung; und
- Beleuchtungsbedingungen des gegenwärtigen Bildes, insbesondere dunkles, mittelmäßig dunkles, normales, mittelmäßig helles und/oder helles Bild.

**4.** Methode nach einem der vorhergehenden Ansprüche, **dadurch gekennzeichnet, dass** der Merkmalvektor (FV) so erzeugt wird, dass er eine räumliche (SFV) und/oder zeitliche (TFV) Information enthält.

**5.** Verfahren nach Anspruch 4, **dadurch gekennzeichnet, dass** die räumliche Information (SFV) so erzeugt wird, dass sie eine Information über die Rauschmessung (NM), ein gemitteltes Bildniveau (APL), eine Histogrammanalyse (HA) und/oder Merkmale enthält, die in einer räumlichen Inhaltsanalyse verwendet werden.

**6.** Methode nach Anspruch 4 oder 5, **dadurch gekennzeichnet, dass** die zeitliche Information (TFV) so erzeugt wird, dass sie Informationen über die Bewegungsabschätzung (ME) und/oder andere Merkmale enthält, die in einer zeitlichen Inhaltsanalyse verwendet werden.

**7.** Bildverbesserungssystem, das in der Lage ist, eine Bildverbesserungsmethode nach einem der vorhergehenden Ansprüche 1 bis 6 und die Schritte davon durchzuführen.

**8.** Computerprogrammprodukt umfassend ein Computerprogramm-Mittel, das geeignet ist, die Bildverbesserungsmethode nach einem der Ansprüche 1 bis 6 und die Schritte davon auszuführen, wenn es auf einem Computer oder einer digitalen Signalverarbeitungsmittel ausgeführt wird.

**9.** Computerlesbares Speichermedium, das ein Computerprogrammprodukt nach Anspruch 8 aufweist.

**Revendications**

**1.** Méthode d'amélioration d'image comprenant les étapes suivantes:

- recevoir (S1) des données d'image (ID) comme données d'entrée (I);
- générer (ICFA) un vecteur fonctionnel (FV) à partir desdites données d'image;
- utiliser le vecteur fonctionnel pour classifier les données d'image et pour générer des données de classification/identification de contenu d'image (ICCI);
- dans laquelle une méthode de classification à apprendre est utilisée pour générer lesdites données de classification/identification de contenu d'image (ICCI), ladite méthode de classification à apprendre étant basée sur un réseau neuronal artificiel et/ou un réseau de croyance bayésien;
- dans laquelle un apprentissage de la méthode de classification à apprendre (S2) est exécutée comme un apprentissage supervisé, dans laquelle des informations cibles constituent lesdites données de classification/identification de contenu d'image (ICCI), et des informations d'entrée constituent ledit vecteur fonctionnel (FV);
- où les informations cibles contiennent des indicateurs indiquant une classification souhaitée des données d'image;
- améliorer et/ou traiter (S3) lesdites données d'image (ID) en utilisant lesdites données de classification/identification de contenu d'image (ICCI), générant et/ou produisant ainsi (S4) des données d'image améliorées (IID) comme données de sortie (0);
- dans laquelle les données d'image sont un signal vidéo, la méthode étant utilisée pour classer différents modes du signal vidéo; et
- dans laquelle les modes suivants du signal vidéo sont classés: absence de mouvement, mode film, mode caméra.

**2.** Méthode selon la revendication 1, **caractérisée en ce que** l'étape de génération (ICFA) d'un vecteur fonctionnel (FV) à partir desdites données d'image comprend au moins une des étapes suivantes:

- convertir les données d'image en un flux de champs;
- estimer le mouvement entre les champs consécutifs;
- générer des champs vectoriels qui représentent le mouvement entre les champs consécutifs; et
- analyser les champs vectoriels et générer un vecteur fonctionnel.

**3.** Méthode selon l'une quelconque des revendications précédentes, **caractérisée en ce que** lesdites données de classification/identification de contenu d'image (ICCI) sont générées pour être plus descriptives pour une ou toute combinaison des modes et/ou des types d'image suivants:

- une séquence de mouvement;
- un niveau de bruit;
- un changement de scène; et
- des conditions d'éclairage d'une image en cours, en particulier une image "sombre", "moyennement sombre", "normale", "moyennement claire" et/ou "claire".

**4.** Méthode selon l'une quelconque des revendications précédentes, **caractérisée en ce que** ledit vecteur fonctionnel (FV) est généré pour contenir des informations spatiales (SFV) et/ou temporelles (TFV).

**5.** Méthode selon la revendication 4, **caractérisée en ce que** lesdites informations spatiales (SFV) sont générées pour contenir des informations relatives à la mesure du bruit (NM), au niveau d'image moyen (APL), à une analyse d'histogramme (HA) et/ou à d'autres fonctionnalités utilisés dans une analyse spatiale de contenu.

**6.** Méthode selon la revendication 4 ou la revendication 5, **caractérisée en ce que** lesdites informations temporelles (TFV) sont générées pour contenir des informations relatives à une estimation de mouvement (ME) et/ou à d'autres fonctionnalités utilisées dans une analyse temporelle de contenu.

**7.** Système d'amélioration d'image capable d'exécuter une méthode d'amélioration d'image selon l'une quelconque des revendications 1 à 6 et les étapes de celle-ci.

**8.** Produit de programme informatique, comprenant un moyen de programme informatique adapté pour exécuter la méthode d'amélioration d'image selon l'une quelconque des revendications 1 à 6 et les étapes de celle-ci, lorsqu'elle est exécutée sur un ordinateur ou un moyen de traitement de signal numérique.

**9.** Support lisible par ordinateur, comprenant un produit de programme informatique selon la revendication 8.

ID, I

↓

| Input step | ⎯ S1 |

| Image content classification/ identification step | S2 |

ICCI

| Image improvement/ processing step | ⎯ S3 |

↓

| output step | ⎯ S4 |

↓

IID, O

Fig. 1

I, ID

Input

ICCI
Image Content
Classification / Identification

S2

ICCI
vector

ICCI

Image
Improvement /
Processing

S3

Improved
Output

IID, O

Fig. 2

EP 1 443 453 B1

13

EP 1 443 453 B1

Image(s) → **Image Content Feature Analysis** → Feature Vector → **teaching-based Image Content Classifiaction/Identification** (e.g. ANN, etc.) → ICCI vector

I, ID

ICFA

FV

S2

ACS

ICCI

## Fig. 3

Fig. 4

Fig. 5

Fig. 6

EP 1 443 453 B1

Fig. 7

Fig. 8

Fig. 9

FRAMES with different
motion phases

Motion    Motion

$t_{n-1}$    $t_n$    $t_{n+1}$    $t$

## Fig. 10

FIELDS with different
motion phases

Motion   Motion   Motion

$t_{n-1}$    $t_n$    $t_{n+1}$    $t$

## Fig. 11

EP 1 443 453 B1

EP 1 443 453 B1

FD

MF ME

VFA

MUXMFVFA

FD *Merge-FLAG*

TFA

Input

MUX
Results

temporal
feature-vector

I, ID

field
memory

Motion
Estimation

$MV_x$

$MV_y$

Vector-Field
Analysis

$z^{-1}$

FM

TCA

Fig. 12

**EP 1 443 453 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020149703 A
- US 6064775 A
- US 5497196 A
- WO 9524017 A

**Non-patent literature cited in the description**

- **FERNSEH ; KINOTECHNIK.** Das digitale Wetgate. Die dritte Noise-Reducer-Generation von Philips BTS. *VDE Verlag GmbH,* 01 July 1996, vol. 50 (7), 387-390